# EUROPEAN PATENT APPLICATION

(11) **EP 4 398 669 A1**
(43) Date of publication of application: **10.07.2024**
(21) Application number: 21955500.0
(22) Date of filing: 02.09.2021
(51) Int. Cl.: H04W 76/14

(54) **INFORMATION TRANSMISSION METHOD AND APPARATUS**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Hersina, Günter
(86) International application number: PCT/CN2021/116297
(87) International publication number: WO 2023/028962

(57) **Abstract**

Embodiments of the present invention disclose an information transmission method and apparatus, which may be applied to systems such as Internet of Vehicles, V2X and V2V. The method is executed by a first terminal, and the method comprises: when a first terminal transmits a physical sidelink feedback channel (PSFCH) in an unlicensed frequency band, accessing a channel monitoring channel by carrying out a first type channel accessing means or accessing a channel monitoring channel by carrying out a second type channel accessing means. By implementing the embodiments of the present invention, the first terminal can transmit the PSFCH in the unlicensed frequency band to access the channel monitoring channel by carrying out the first type of channel access mode or access the channel monitoring channel in the second type of channel access mode, thereby transmitting the PSFCH, and improving the reliability of direct communication.

## Description

### FIELD

The present invention relates to the field of communication technologies, and in particular to an information transmission method and apparatus.

### BACKGROUND

Long term evolution (LTE) supports terminal-to-terminal communication in a cellular network since the third generation partnership project (3GPP) release 12 (R12). In a vehicle to everything (V2X) system, transmission may be performed on a link (such as an uplink (UL) and a downlink (DL)) between a network device and a user equipment (UE) or on a sidelink (SL) between a UE and another UE.

The UE needs to perform a listen before talk (LBT) process for SL transmission in an unlicensed frequency band, but currently there is no channel access method for a physical sidelink feedback channel (PSFCH) to monitor the channel.

### SUMMARY

Embodiments of the present invention provide an information transmission method and apparatus, which may be applied to the Internet of Vehicles, such as the vehicle-to-everything (V2X) communication, the long-term evolution-vehicle (LTE-V) technology, and the vehicle-to-vehicle (V2V) communication, or may be applied in the intelligent driving, the intelligent networked vehicles and other fields.

According to a first aspect of embodiments of the present invention, there is provided an information transmission method, performed by a first terminal, including: in a case where the first terminal performs a physical sidelink feedback channel (PSFCH) transmission in an unlicensed frequency band, monitoring a channel in a first type of channel access mode or a second type of channel access mode.

In this technical solution, by implementing the embodiment of the present invention, in the case where the first terminal performs a physical sidelink feedback channel (PSFCH) transmission in an unlicensed frequency band, the first type of channel access mode or the second type of channel access mode is performed to access the channel and monitor the channel. In this way, it is possible for the first terminal to perform the PSFCH transmission in the unlicensed frequency band by accessing the channel and monitoring the channel in the first type of channel access mode or the second type of channel access mode, thus realizing the PSFCH transmission and improving the reliability of the sidelink communication.

In an embodiment, the method further includes: before the first terminal performs the PSFCH transmission, in a case where no shareable channel occupancy time (COT) of a second terminal exists, using, by the first terminal, a first channel access priority to monitor the channel in the first type of channel access mode.

In an embodiment, using, by the first terminal, the first channel access priority to monitor the channel in the first type of channel access mode includes: in a case where the first terminal performs only the PSFCH transmission, using, by the first terminal, the first channel access priority configured by a network device to monitor the channel in the first type of channel access mode, or using, by the first terminal, the first channel access priority that is the same as a channel access priority of data carried on a physical sidelink shared channel (PSSCH) corresponding to the PSFCH to monitor the channel in the first type of channel access mode.

In an embodiment, the first channel access priority configured by the network device includes: the first channel access priority configured by the network device based on a cell-specific or user equipment-specific (UE-specific) configuration.

In an embodiment, the first channel access priority configured by the network device includes: the first channel access priority, configured by the network device, being a highest channel access priority, or the first channel access priority, configured by the network device, being not a highest channel access priority.

In an embodiment, the method further includes: determining the channel access priority of the data carried on the PSSCH according to a quality of service (QoS) flow identifier of the data carried on the PSSCH.

In an embodiment, using, by the first terminal, the first channel access priority to monitor the channel in the first type of channel access mode includes: in a case where the first terminal performs a PSSCH transmission after the PSFCH transmission, and in a case where a channel access priority of data carried on a PSSCH after the PSFCH transmission is a second channel access priority, using, by the first terminal, the first channel access priority that is the same as the second channel access priority to monitor the channel in the first type of channel access mode.

In an embodiment, the method further includes: determining the channel access priority of the data carried on the PSSCH according to a QoS flow identifier of the data carried on the PSSCH.

In an embodiment, using, by the first terminal, the first channel access priority to monitor the channel in the first type of channel access mode includes: in a case where the first terminal performs a PSSCH transmission after the PSFCH transmission, and in a case where the first terminal is pre-configured to use a third channel access priority to monitor the channel in the first type of channel access mode, and a channel access priority of data carried on a PSSCH after the PSFCH transmission is a second channel access priority, using, by the first terminal, the first channel access priority that is the same as a lower one between the third channel access priority and the second channel access priority to monitor the channel in the first type of channel access mode.

In an embodiment, pre-configuring the first terminal to use the third channel access priority to monitor the channel in the first type of channel access mode further includes: pre-configuring the first terminal to use the third channel access priority configured by the network device to monitor the channel in the first type of channel access mode, or pre-configuring the first terminal to use the third channel access priority that is the same as the channel access priority of the data carried on the PSSCH corresponding to the PSFCH to monitor the channel in the first type of channel access mode.

In an embodiment, the third channel access priority configured by the network device includes: the third channel access priority configured by the network device based on a cell-specific or UE-specific configuration.

In an embodiment, the third channel access priority configured by the network device includes: the third channel access priority configured by the network device being a highest channel access priority, or the third channel access priority configured by the network device being not a highest channel access priority.

In an embodiment, the method further includes: determining the channel access priority of the data carried on the PSSCH according to a QoS flow identifier of the data carried on the PSSCH.

In an embodiment, the second type of channel access mode includes: a Type2A channel access mode, a Type2B channel access mode, and a Type2C channel access mode; the method further includes: acquiring first indication information configured by a network device; and monitoring, by the first terminal, the channel in the Type2A channel access mode, the Type2B channel access mode, or the Type2C channel access mode according to the first indication information.

In an embodiment, acquiring the first indication information configured by the network device further includes: acquiring the first indication information configured by the network device based on a cell-specific or UE-specific configuration.

In an embodiment, the method further includes: before the first terminal performs the PSFCH transmission, in a case where a shareable COT of a second terminal exists, monitoring, by the first terminal, the channel in the second type of channel access mode.

According to a second aspect of embodiments of the present invention, there is provided an information transmission method, performed by a network device, including: configuring first indication information and/or a first channel access priority for a first terminal, where the first indication information instructs the first terminal to monitor a channel in a Type2A channel access mode, a Type2B channel access mode, or a Type2C channel access mode, and the first channel access priority is a channel access priority used by the first terminal to monitor the channel in a first type of channel access mode.

In an embodiment, the method further includes: configuring the first indication information and/or the first channel access priority for the first terminal based on a cell-specific or UE-specific configuration.

According to a third aspect of embodiments of the present invention, there is provided an information transmission apparatus, having some or all functions of the terminal for realizing the method described in the first aspect. For example, the function of the information transmission apparatus may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

In an embodiment, a structure of the information transmission apparatus may include a transceiving module and a processing module, and the processing module is configured to support the information transmission apparatus to perform corresponding functions in the above methods. The transceiving module is configured to support communication between the information transmission apparatus and other devices. The information transmission apparatus may further include a storing module coupled with the transceiving module and the processing module, and configured to store computer program and data of the information transmission apparatus.

In an example, the processing module may be a processor, the transceiving module may be a transceiver or a communication interface, and the storing module may be a memory.

In an embodiment, the information transmission apparatus includes a processing module configured to monitor a channel in a first type of channel access mode or a second type of channel access mode in a case where a first terminal performs a physical sidelink feedback channel (PSFCH) transmission in an unlicensed frequency band.

According to a fourth aspect of embodiments of the present invention, there is provided an information transmission apparatus, having some or all functions of the network device for realizing the method described in the second aspect. For example, the function of the information transmission apparatus may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

In an embodiment, a structure of the information transmission apparatus may include a transceiving module and a processing module, and the processing module is configured to support the information transmission apparatus to perform corresponding functions in the above methods. The transceiving module is configured to support communication between the information transmission apparatus and other devices. The information transmission apparatus may further include a storing module coupled with the transceiving module and the processing module, and configured to store computer program and data of the information transmission apparatus.

In an embodiment, the information transmission apparatus includes: a transceiving module configured to configure first indication information and/or a first channel access priority for a first terminal, where the first indication information instructs the first terminal to monitor a channel in a Type2A channel access mode, a Type2B channel access mode, or a Type2C channel access mode, and the first channel access priority is a channel access priority used by the first terminal to monitor the channel in a first type of channel access mode.

According to a fifth aspect of embodiments of the present invention, there is provided a communication device including a processor, and the processor is configured to invoke a computer program stored in a memory to execute the method described in the first aspect.

According to a sixth aspect of embodiments of the present invention, there is provided a communication device including a processor, and the processor is configured to invoke a computer program stored in a memory to execute the method described in the second aspect.

According to a seventh aspect of embodiments of the present invention, there is provided a communication device, including: a processor, and a memory for storing a computer program, where the processor is configured to execute the computer program stored in the memory to cause the communication device to perform the method in the first aspect.

According to an eighth aspect of embodiments of the present invention, there is provided a communication device, including: a processor, and a memory for storing a computer program, where the processor is configured to execute the computer program stored in the memory to cause the communication device to perform the method in the second aspect.

According to a ninth aspect of embodiments of the present invention, there is provided a communication device, including a processor and an interface circuit, where the interface circuit is configured to receive a code instruction and transmit the code instruction to the processor, and the processor is configured to run the code instruction to perform the method in the first aspect.

According to a tenth aspect of embodiments of the present invention, there is provided a communication device, including a processor and an interface circuit, where the interface circuit is configured to receive a code instruction and transmit the code instruction to the processor, and the processor is configured to run the code instruction to perform the method in the second aspect.

According to an eleventh aspect of embodiments of the present invention, there is provided an information transmission system, including: a communication device described in the third aspect and a communication device described in the fourth aspect; a communication device described in the fifth aspect and a communication device described in the sixth aspect; a communication device described in the seventh aspect and a communication device described in the eighth aspect; or a communication device described in the ninth aspect and a communication device described in the tenth aspect.

According to a twelfth aspect of embodiments of the present invention, there is provided a computer-readable storage medium having stored therein instructions for the above terminal. When the instructions are executed, the terminal performs the method described in the first aspect.

According to a thirteenth aspect of embodiments of the present invention, there is provided a computer-readable storage medium having stored therein instructions for the above network device. When the instructions are executed, the network device performs the method described in the second aspect.

According to a fourteenth aspect of embodiments of the present invention, there is provided a computer program product including a computer program that, when run on a computer, causes the computer to perform the method described in the first aspect.

According to a fifteenth aspect of embodiments of the present invention, there is provided a computer program product including a computer program that, when run on a computer, causes the computer to perform the method described in the second aspect.

According to a sixteenth aspect of embodiments of the present invention, there is provided a chip system, including at least one processor and an interface, configured to support the terminal to realize the functions involved in the first aspect, for example, determine or process at least one of data and information involved in the above method. In a possible design, the chip system further includes a memory, and the memory is configured to store computer programs and data of the terminal. The chip system may be formed by a chip, or may include a chip and other discrete devices.

According to a seventeenth aspect of embodiments of the present invention, there is provided a chip system, including at least one processor and an interface, configured to support the terminal to realize the functions involved in the second aspect, for example, determine or process at least one of data and information involved in the above method. In a possible design, the chip system further includes a memory, and the memory is configured to store computer programs and data of the terminal. The chip system may be formed by a chip, or may include a chip and other discrete devices.

According to an eighteenth aspect of embodiments of the present invention, there is provided a computer program that, when run on a computer, causes the computer to perform the method described in the first aspect.

According to a nineteenth aspect of embodiments of the present invention, there is provided a computer program that, when run on a computer, causes the computer to perform the method described in the second aspect.

### BRIEF DESCRIPTION OF THE DRAWINGS

In order to clearly illustrate the technical solutions in the embodiments of the present invention or the related art, drawings applied to the embodiments of the present invention or the related art are described below.
FIG. 1 is a schematic diagram of an architecture of a communication system provided by an embodiment of the present invention.
FIG. 2 is a flowchart of an information transmission method provided by an embodiment of the present invention.
FIG. 3 is a flowchart of an information transmission method provided by another embodiment of the present invention.
FIG. 4 is a block diagram of an information transmission apparatus provided by an embodiment of the present invention.
FIG. 5 is a block diagram of a communication device provided by an embodiment of the present invention.
FIG. 6 is a block diagram of a chip provided by an embodiment of the present invention.

### DETAILED DESCRIPTION

For ease of understanding, terms involved in the present invention are introduced below.

### 1. Vehicle-to-everything (V2X) communication

The V2X communication refers to a communication between a vehicle and any external device, including but not limited to: vehicle to vehicle (V2V) communication, vehicle to pedestrian (V2P) communication, vehicle to infrastructure (V2I) communication, and vehicle to network (V2N) communication.

In order to better understand the information transmission method and device disclosed in the embodiments of the present invention, a communication system to which the embodiments of the present invention are applicable is described below.

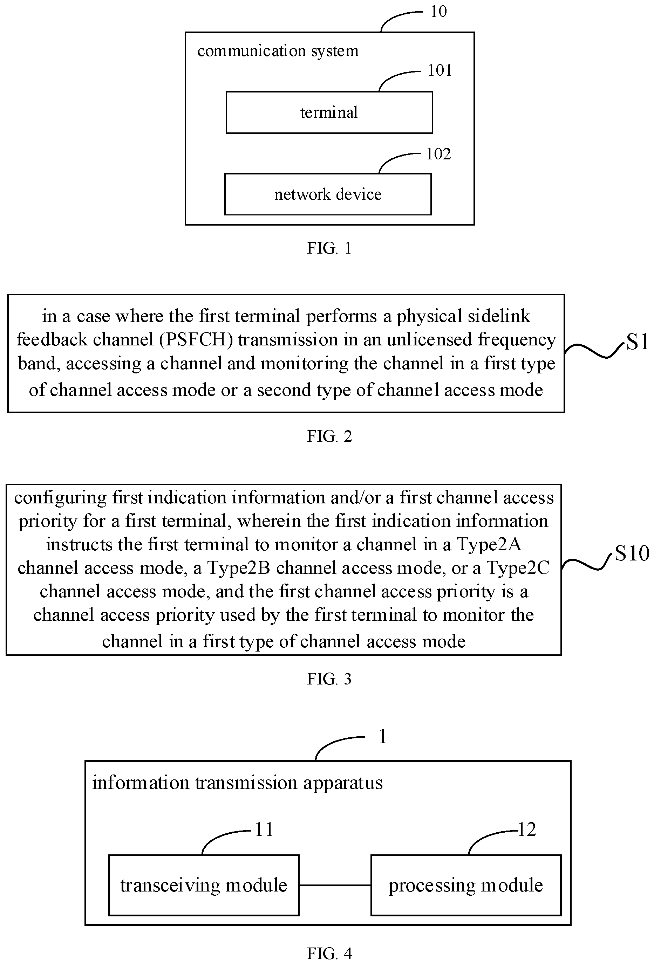

Referring to FIG. 1, FIG. 1 is a schematic diagram of an architecture of a communication system 10 provided by an embodiment of the present invention. The communication system 10 may include, but not limited to, a network device and a terminal. The number and form of the devices shown in FIG. 1 are only example and do not constitute a limitation to the embodiments of the present invention. In practical applications, the system may include two or more network devices, and two or more terminals. In an example, the communication system shown in FIG. 1 includes one network device 101 and one terminal 102.

It should be noted that the technical solutions of the embodiments of the present invention may be applied to various communication systems, for example, a long term evolution (LTE) system, a fifth generation (5G) mobile communication system, a 5G new radio (NR) system, or other future new mobile communication systems. It should also be noted that the sidelink in the embodiments of the present invention may also be referred to as a direct link.

The network device 101 in the embodiments of the present invention is an entity on the network for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi) system. Specific technologies and specific device forms adopted by the network device are not limited in the embodiments of the present invention. The network device 101 provided in the embodiments of the present invention may be composed of a central unit (CU) and a distributed unit (DU), where the CU may also be called a control unit. The CU-DU structure may divide the network device, such as protocol layers of the base station, and functions of some protocol layers are arranged in the CU for centralized control, and functions of a part of or all the remaining protocol layers are distributed in the DU(s), and the CU centrally controls the DU(s).

The terminal 102 in the embodiments of the present invention is an entity on the user side for receiving or transmitting signals, such as a mobile phone. The terminal may also be called a terminal device, a user equipment (UE), a mobile station (MS), and a mobile terminal (MT). The terminal may be a car with a communication function, a smart car, a mobile phone, a wearable device, a pad, a computer with a wireless transceiver function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in safe transportation, a wireless terminal in a smart city, or a wireless terminal in a smart home. Specific technologies and specific device forms adopted by the terminal are not limited in the embodiments of the present invention.

It can be understood that the communication system described in the embodiments of the present invention is to illustrate the technical solutions of the embodiments of the present invention more clearly, and does not constitute a limitation on the technical solutions provided by the embodiments of the present invention. With the evolution of the system architecture and the emergence of new business scenarios, the technical solutions provided by the embodiments of the present invention are applicable to similar technical problems.

The information transmission method and device provided by the present invention will be described in detail below with reference to the accompanying drawings.

Referring to FIG. 2, FIG. 2 is a flowchart of an information transmission method provided by an embodiment of the present invention. The method is performed by a first terminal. As shown in FIG. 2, the method may include, but not limited to, the following step:

In block S 1, in a case where the first terminal performs a physical sidelink feedback channel (PSFCH) transmission in an unlicensed frequency band, a channel is accessed and monitored in a first type of channel access mode or a second type of channel access mode.

In the vehicle to everything (V2X) communication system, terminals may perform direct communication through a direct link (such as a sidelink (SL)). In order to improve the reliability of the direct communication, the 3rd generation partnership project (3GPP) defines a PSFCH for the sidelink, the PSFCH is configured to send sidelink feedback control information (SFCI), the SFCI may at least include information that a receiving terminal feeds back to a sending terminal whether data is successfully received.

In an embodiment, the sending terminal (for example a terminal other than the first terminal) send data included in a physical sidelink shared channel (PSSCH) to the receiving terminal (for example the first terminal). After the receiving terminal (for example the first terminal) receives the data sent by the sending terminal (for example the terminal other than the first terminal), it may transmit the data to the sending terminal (for example the terminal other than the first terminal) on the PSFCH according to data reception situation. After the receiving terminal (for example the terminal other than the first terminal) receives the SFCI, it may select appropriate resource(s) to reschedule data according to the SFCI, so as to improve the success rate of data transmission, thus improving the reliability of the sidelink(direct) communication.

In the case where the first terminal performs the PSFCH transmission in the unlicensed frequency band, it needs to access the channel in a competition manner, that is, listen before talk (LBT) needs to be performed before accessing the channel. Only when the channel is idle, the first terminal can access the channel to perform the PSFCH transmission. Compared with the licensed frequency band, communication in the unlicensed frequency band is uncertain due to the idle state of the channel. With the competition manner, fairness for the first terminal to access the channel in the frequency band is ensured.

During the channel access process, the first terminal may detect the channel, for example, by using the LBT method, to evaluate usability of the channel for the PSFCH transmission. The channel access mode may include, for example, a first type of channel access mode and a second type of channel access mode.

The first type of channel access mode may be a Type1 channel access mode, and the second type of channel access mode may be a Type2 channel access mode.

By implementing the embodiments of the present invention, in the case where the first terminal performs the PSFCH transmission in the unlicensed frequency band, the first type of channel access mode may be performed to access the channel and monitor the channel or the second type of channel access mode may be performed to access the channel and monitor the channel. In this way, it is possible for the first terminal to perform the PSFCH transmission in the unlicensed frequency band by accessing the channel and monitoring the channel in the first type of channel access mode or the second type of channel access mode, thus realizing the PSFCH transmission and improving the reliability of the sidelink communication.

In some embodiments, using, by the first terminal, a first channel access priority to access the channel and monitor the channel in the first type of channel access mode includes: in a case where the first terminal performs only the PSFCH transmission, using, by the first terminal, the first channel access priority configured by a network device to access the channel and monitor the channel in the first type of channel access mode, or using, by the first terminal, the first channel access priority that is the same as a channel access priority of data carried on a physical sidelink shared channel (PSSCH) corresponding to the PSFCH to access the channel and monitor the channel in the first type of channel access mode.

It can be understood that after receiving data of the PSSCH from the other terminal, the first terminal will perform the PSFCH transmission to the other terminal. In the case where the first terminal performs only the PSFCH transmission, the first terminal uses the first channel access priority configured by the network device to access the channel and monitor the channel in the first type of channel access mode, or the first terminal uses the first channel access priority that is the same as the channel access priority of the data carried on the PSSCH corresponding to the PSFCH to access the channel and monitor the channel in the first type of channel access mode.

In some embodiments, the channel access priority of the data carried on the PSSCH is determined according to a quality of service (QoS) flow identifier of the data carried on the PSSCH.

In the embodiments of the present invention, the channel access priority of the data carried on the PSSCH corresponding to the PSFCH is determined according to the QoS flow identifier of the data carried on the PSSCH.

In some embodiments, the first channel access priority configured by the network device includes: the first channel access priority configured by the network device based on a cell-specific or user equipment-specific (UE-specific) configuration.

It can be understood that the first channel access priority configured by the network device based on the cell-specific configuration indicates that the network device configures the same first channel access priority for terminals in one cell, that is, different terminals located in the same cell have the same channel access priority. The first channel access priority configured by the network device based on the UE-specific configuration indicates that the network device configures a first channel access priority for every terminal in the cell separately, that is, the channel access priorities of the terminals in the same cell may be different.

In some embodiments, the first channel access priority configured by the network device includes: the first channel access priority, configured by the network device, being a highest channel access priority, or the first channel access priority, configured by the network device, being not a highest channel access priority.

In the embodiments of the present invention, the PSFCH (data) is used as a kind of control information, such as control information in new radio-unlicensed spectrum (NR-U), for example, downlink control information (DCI) and uplink control information (UCI). The DCI and UCI configured by the network device are the highest channel access priority P=1. In the embodiments of the present invention, the channel access priority of the PSFCH transmission performed by the first terminal is configured by the network device as the highest channel access priority, that is, the first channel access priority P=1.

In the embodiments of the present invention, the network device configures the first channel access priority as being not the highest channel access priority. It can be understood that the channel access priority P for the first terminal to transmit data on the PSFCH may be not equal to 1.

In some embodiments, using, by the first terminal, the first channel access priority to monitor the channel in the first type of channel access mode includes: in a case where the first terminal performs a PSSCH transmission after the PSFCH transmission, and a channel access priority of data carried on a PSSCH after the PSFCH transmission is a second channel access priority, using, by the first terminal, the first channel access priority that is the same as the second channel access priority to monitor the channel in the first type of channel access mode.

It can be understood that after the other terminal sends information to the first terminal, the first terminal performs the PSFCH transmission to the other terminal to inform the other terminal whether the information is successfully received. Further, the first terminal may also perform the PSSCH transmission to the other terminal, and the first terminal has other data that needs to be newly sent to the other terminal.

The channel access priority of the first terminal to transmit the data carried on the PSSCH is known, for example as the second channel access priority. In this case, the first terminal uses the first channel access priority being the same as the second channel access priority to monitor the channel in the first type of channel access mode.

In some embodiments, the channel access priority of the data carried on the PSSCH is determined according to the QoS flow identifier of the data carried on the PSSCH.

In the embodiments of the present invention, the channel access priority of the data carried on the PSSCH is determined according to the OoS flow identifier of the data carried on the PSSCH.

In some embodiments, using, by the first terminal, the first channel access priority to monitor the channel in the first type of channel access mode includes: in a case where the first terminal performs a PSSCH transmission after the PSFCH transmission, the first terminal is pre-configured to use a third channel access priority to monitor the channel in the first type of channel access mode, and a channel access priority of data carried on a PSSCH after the PSFCH transmission is a second channel access priority, using, by the first terminal, the first channel access priority that is the same as a lower one between the third channel access priority and the second channel access priority to monitor the channel in the first type of channel access mode.

In the embodiments of the present invention, in the case where the first terminal uses the third channel access priority for monitoring the channel in the first type of channel access mode, and the channel access priority of the data carried on the PSSCH after the PSFCH transmission is the second channel access priority, during the first terminal performing the channel access procedure for the PSFCH transmission, by comparing the third channel access priority with the second channel access priority, the first channel access priority is determined as the lower one of the second and the third channel access priorities, and the first terminal uses the first channel access priority to monitor the channel in the first type of channel access mode.

In some embodiments, pre-configuring the first terminal to use the third channel access priority to monitor the channel in the first type of channel access method also includes: pre-configuring the first terminal to use the third channel access priority configured by the network device to monitor the channel in the first type of channel access mode, or pre-configuring the first terminal to use the third channel access priority that is the same as the channel access priority of the data carried on the PSSCH corresponding to the PSFCH to monitor the channel in the first type of channel access mode.

In some embodiments, the channel access priority of the data carried on the PSSCH is determined according to the QoS flow identifier of the data carried on the PSSCH.

In the embodiments of the present invention, the channel access priority of the data carried on the PSSCH corresponding to the PSFCH is determined according to the QoS flow identifier of the data carried on the PSSCH.

In some embodiments, the third channel access priority configured by the network device includes: the third channel access priority configured by the network device based on a cell-specific or UE-specific configuration.

It can be understood that the third channel access priority configured by the network device based on the cell-specific configuration indicates that the network device configures the same third channel access priority for terminals in one cell, that is, different terminals located in the same cell have the same channel access priority. The third channel access priority configured by the network device based on the UE-specific configuration indicates that the network device configures a third channel access priority for every terminal in the cell separately, that is, the channel access priorities of the terminals in the same cell may be different.

In some embodiments, the third channel access priority configured by the network device includes: the third channel access priority configured by the network device being a highest channel access priority, or the third channel access priority configured by the network device being not a highest channel access priority.

In the embodiments of the present invention, the PSFCH (data) is used as a kind of control information, such as control information in new radio-unlicensed spectrum (NR-U), for example, downlink control information (DCI) and uplink control information (UCI). The DCI and UCI configured by the network device are the highest channel access priority P=1. In the embodiments of the present invention, the channel access priority of the PSFCH transmission performed by the first terminal is configured by the network device as the highest channel access priority, that is, the third channel access priority P=1.

In the embodiments of the present invention, the network device configures the third channel access priority as being not the highest channel access priority. It can be understood that the channel access priority P for the first terminal to transmit data on the PSFCH may be not equal to 1.

In some embodiments, the second type of channel access mode includes: a Type2A channel access mode, a Type2B channel access mode, and a Type2C channel access mode; the method further includes: acquiring first indication information configured by a network device; and monitoring, by the first terminal, the channel in the Type2A channel access mode, the Type2B channel access mode, or the Type2C channel access mode according to the first indication information.

In the embodiments of the present invention, the second type of channel access mode, i.e., the Type2 channel access mode includes multiple subtypes with different detecting intervals, for example, the Type2A channel access mode, the Type2B channel access mode and the Type2C channel access mode.

For the Type 2A channel access mode (Cat.2LBT), the first terminal may perform the PSFCH transmission immediately after sensing that the channel is idle at least at a detecting interval (for example, 25 µs).

For the Type 2B channel access procedure (Cat.2LBT), the first terminal may perform the PSFCH transmission immediately after sensing that the channel is idle within a specific duration (for example, 16 µs).

For the Type2C channel access procedure (Cat. 1LBT), the first terminal may perform the PSFCH transmission without sensing the channel.

In an embodiment, the Type 2A channel access mode may be a channel detection with a single time slot of 25 µs. Before start, the channel detection starts 25 µs before start. One 16 µs detection and one 9 µs detection are performed, if the channel is idle in both detections, it is considered to be idle.

In an embodiment, the Type2B channel access mode (i.e., a short LBT method) may be a channel detection of a single detection time slot with a fixed length of 16 µs. If, the channel is considered to be idle if 4 µs or more in the last 9 µs is detected.

In an embodiment, for the Type2C channel access mode, the transmission may be performed directly without the channel detection. Because the time difference between this transmission and the previous transmission is less than 16 µs, they are considered to be the same transmission, and the transmission length does not exceed 584 µs.

In some embodiments, acquiring the first indication information configured by the network device further includes: acquiring the first indication information configured by the network device based on a cell-specific or UE-specific configuration.

It can be understood that the network device configuring the first indication information based on the cell-specific configuration indicates that the network device configures the same first indication information for terminals in one cell, and the first indication information of different terminals located in the same cell is the same. The network device configuring the first indication information based on the UE-specific configuration indicates that the network device configures the first indication information for every terminal in one cell separately, that is, the first indication information of different terminals located in the same cell may be different.

In some embodiments, before the first terminal performs the PSFCH transmission, in a case where a shareable COT of a second terminal exists, the first terminal monitors the channel in the second type of channel access mode.

In the embodiment of the present invention, before the first terminal performs the PSFCH transmission, in the case where the shareable COT of the second terminal exists, the first terminal performs the second type of channel access mode to monitor the channel.

Referring to FIG. 3, FIG. 3 is a flowchart of an information transmission method provided by another embodiment of the present invention.

As shown in FIG. 3, the method is performed by a network device and includes the following step.

In block S 10, first indication information and/or a first channel access priority is configured for a first terminal, where the first indication information instructs the first terminal to monitor a channel in a Type2A channel access mode, a Type2B channel access mode, or a Type2C channel access mode, and the first channel access priority is a channel access priority used by the first terminal to monitor the channel in a first type of channel access mode.

In the embodiments of the present invention, the network device configures the first indication information and/or the first channel access priority for the first terminal, and the first terminal monitors the channel in the Type2A channel access mode, the Type2B channel access mode, or the Type2C channel access mode, or the first terminal monitors the channel in the first type of channel access mode.

In some embodiments, the first indication information and/or the first channel access priority is configured for the first terminal based on a cell-specific or UE-specific configuration.

In the embodiments of the present invention, the first indication information is configured for the first terminal based on the cell-specific or UE-specific configuration.

It can be understood that the network device configuring the first indication information based on the cell-specific configuration indicates that the network device configures the same first indication information for terminals in one cell, that is, the first indication information of different terminals located in the same cell is the same. The network device configuring the first indication information based on the UE-specific configuration indicates that the network device configures the first indication information for every terminal in one cell separately, that is, the first indication information of different terminals located in the same cell may be different.

In the embodiments of the present invention, the network device configures the first channel access priority for the first terminal based on the cell-specific or UE-specific configuration.

It can be understood that the network device configuring the first channel access priority based on the cell-specific configuration indicates that the network device configures the same first channel access priority for terminals in one cell, that is, the first channel access priorities of different terminals located in the same cell are the same. The network device configuring the first channel access priority based on the UE-specific configuration indicates that the network device configures the first channel access priority for every terminal in one cell separately, that is, the first channel access priorities of different terminals located in the same cell may be different.

In the above embodiments provided in the present invention, the methods provided in the embodiments of the present invention are introduced from the perspectives of the network device and the first terminal respectively. In order to realize the various functions in the methods provided by the above-mentioned embodiments of the present invention, the network device and the first terminal may include a hardware structure and a software module, and realize the above-mentioned functions in the form of a hardware structure, a software module, or a hardware structure plus a software module. A certain function among the above functions may be implemented in the form of the hardware structure, the software module, or the hardware structure plus the software module.

Referring to FIG. 4, FIG. 4 is a block diagram of an information transmission apparatus 1 provided by an embodiment of the present invention. The communication apparatus 1 may include a transceiving module 11 and a processing module 12. The transceiving module 11 may include a transmitting module and/or a receiving module. The transmitting module is configured to realize a transmitting function the receiving module is configured to realize a receiving function, and thus the transceiving module 12 is configured to realize the transmitting and receiving functions.

The information transmission apparatus 1 may be a terminal (such as the first terminal in the foregoing method embodiments), or a device in a terminal, or a device that can be matched with a terminal. Alternatively, the information transmission apparatus 1 may be a network device, or a device in the network device, or a device that can be matched with the network device.

The information transmission apparatus 1 is a terminal (such as the first terminal in the foregoing method embodiments), and includes: a processing module configured to monitor a channel in a first type of channel access mode or a second type of channel access mode in a case where a first terminal performs a physical sidelink feedback channel (PSFCH) transmission in an unlicensed frequency band.

The information transmission apparatus 1 is a network device and includes: a transceiving module configured to configure first indication information and/or a first channel access priority for a first terminal, where the first indication information instructs the first terminal to monitor a channel in a Type2A channel access mode, a Type2B channel access mode, or a Type2C channel access mode, and the first channel access priority is a channel access priority used by the first terminal to monitor the channel in a first type of channel access mode.

With regard to the information transmission apparatus 1 in the above embodiments, the specific manner in which each module executes operations has been described in detail in the embodiments related to the method, and will not be described in detail here. The information transmission apparatus 1 provided in the above embodiments of the present invention achieves the same or similar beneficial effects as the information transmission methods provided in some of the above embodiments, which will not be repeated here.

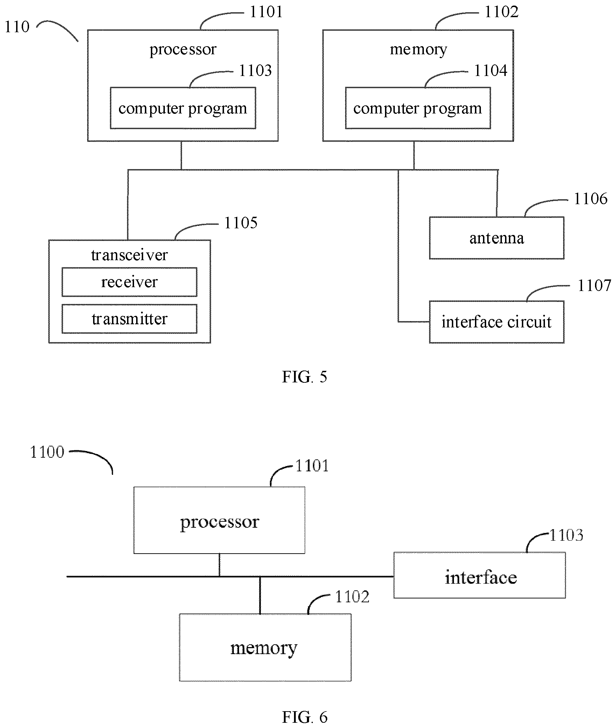

Referring to FIG. 5, FIG. 5 is a block diagram of a communication device 1000 provided by an embodiment of the present invention. The communication device 1000 may be the network device or the terminal (such as the first terminal in the embodiments described above), or a chip, a chip system, or a processor that supports the network device to implement the above method, or a chip, a chip system, or a processor that supports the terminal to implement the above method. The communication device 1000 may be used to implement the methods described in the foregoing method embodiments, and the details may be referred to the description in the foregoing method embodiments.

The communication device 1000 may be a network device, or a terminal, or a chip, a chip system, or a processor that supports the network device to implement the above method, or a chip, a chip system, or a processor that supports the terminal to implement the above method. The device may be used to implement the methods described in the above method embodiments, and the details may be referred to the description in the foregoing method embodiments.

The communication device 1000 may include one or more processors 1001. The processor 1001 may be a general purpose processor or a special purpose processor. For example, it may be a baseband processor or a central processing unit. The baseband processor may be used to process communication protocols and communication data, and the central processing unit may be configured to control the communication device (such as a base station, a baseband chip, a terminal device, a terminal device chip, a DU or a CU), execute a computer program, and process data for the computer program.

Optionally, the communication device 1000 may further include one or more memories 1002, on which a computer program 1004 may be stored, and the memory 1002 executes the computer program 1004, so that the communication device 1000 executes the methods described in the foregoing method embodiments. Optionally, data may also be stored in the memory 1002. The communication device 1000 and the memory 1002 can be set separately or integrated together.

Optionally, the communication device 1000 may further include a transceiver 1005 and an antenna 1006. The transceiver 1005 may be called a transceiver unit, a transceiver device, or a transceiver circuit, and is configured to realize the transceiver function. The transceiver 1005 may include a receiver and a transmitter, and the receiver may be called a receiver device or a receiving circuit for realizing a receiving function; the transmitter may be called a transmitter device or a transmitter circuit for realizing a transmitter function.

Optionally, the communication device 1000 may further include one or more interface circuits 1007. The interface circuit 1007 is configured to receive code instructions and transmit them to the processor 1001. The processor 1001 runs the code instructions to enable the communication device 1000 to execute the methods described in the foregoing method embodiments.

The communication device 1000 is a terminal (such as the first terminal in the foregoing method embodiments), and the processor 1001 is configured to execute the step in block S1 in FIG. 2.

The communication device 1000 is a network device, and the transceiver 1005 is configured to execute the step in block S10 in FIG. 3.

In an implementation manner, the processor 1001 may include a transceiver for implementing receiving and sending functions. For example, the transceiver may be a transceiver circuit, or an interface, or an interface circuit. The transceiver circuit, the interface or the interface circuit for realizing the receiving and sending functions may be separated or integrated together. The above-mentioned transceiver circuit, interface or interface circuit may be configured for reading and writing code/data, or the above-mentioned transceiver circuit, interface or interface circuit may be used for signal transmission.

In an implementation manner, the processor 1001 may store a computer program 1003, and the computer program 1003 is executed by the processor 1001 to enable the communication device 1000 to execute the methods described in the foregoing method embodiments. The computer program 1003 may be solidified in the processor 1001, and in this case, the processor 1001 may be implemented by hardware.

In an embodiment, the communication device 110 may include a circuit that may perform functions of transmitting or receiving or communicating in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above embodiments may be the terminal (such as the terminal in the method embodiments described above), but the scope of the communication device described in the present invention is not limited thereto and the construction of the communication device is not limited by FIG. 5. The communication device may be a stand-alone device or may be a part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) ASIC such as modem; (4) modules that may be embedded in other devices; (5) a receiver, a terminal device, an intelligent terminal device, a cellular phone, a wireless device, a handset, a mobile unit, an on-vehicle device, a network device, a cloud device, an artificial intelligence device, etc.; (6) others.

In a case where the communication device may be the chip or the chip system, a block diagram of the chip shown in FIG. 6 may be referred to.

The chip 1100 may include a processor 1101 and an interface 1103. There may be one or more processors 1101 and multiple interfaces 1103.

In a case where the chip is configured to realize functions of the terminal in the embodiments of the present invention, the interface 1103 is configured to receive code instructions and send them to the processor. The processor 1101 is configured to run the code instructions to perform the information transmission method as described in the above embodiments.

In a case where the chip is configured to realize functions of the network device in the embodiments of the present invention, the interface 1103 is configured to receive code instructions and send them to the processor. The processor 1101 is configured to run the code instructions to perform the information transmission method as described in the above embodiments.

Optionally, the chip further includes a memory 1102 for storing necessary computer programs and data.

Those skilled in the art may further appreciate that the various illustrative logical blocks and steps described in embodiments of the present invention may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be understood as exceeding the scope of protection of embodiments of the present invention.

The embodiments of the present invention further provides an information transmission system. The system includes the information transmission apparatus as the terminal (such as the first terminal in the aforementioned method embodiments) and the information transmission apparatus as the network device in the aforementioned embodiment shown in FIG. 4, or the system includes the communication device as the terminal (such as the first terminal in the aforementioned method embodiments) and the communication device as the network device in the aforementioned embodiment shown in FIG. 5.

The present invention further provides a readable storage medium storing thereon instructions that, and when executed by a computer, cause functions of any one of the above method embodiments to be realized.

The present invention further provides a computer program product that, when executed by the computer, cause functions of any one of the above method embodiments to be realized.

In the above embodiments, the present invention may be implemented in whole or in part by the hardware, software, firmware or their combination. When implemented in the software, the present invention may be implemented in whole or in part as the computer program product. The computer program product includes one or more computer programs. The computer programs, when loaded and executed on the computer, result in whole or in part in processes or functions according to embodiments of the present invention. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present invention are merely for convenience of description and are not intended to limit the scope of embodiments of the present invention, which also represent a sequential order.

"At least one" in the present invention may also be described as one or more, and "multiple" may be two, three, four, or more, and the present invention is not limited thereto. In embodiments of the present invention, regarding one technical feature, the technical features in the technical feature are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present invention may be configured or predefined. Values of information in each table are merely examples, and may be configured as other values, which is not limited in the present invention. In a case of configuring the correspondence between the information and each parameter, it is not necessarily required that all the correspondences shown in each table must be configured. For example, the correspondence shown in certain rows in the tables in the present invention may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a structure, a class, a heap, a hash table or a hash table.

"Predefined" in the present invention may be understood as determined, predetermined, stored, pre-stored, pre-negotiated, pre-configured, cured, or pre-fired.

Those skilled in the art may appreciate that units and algorithm steps of each example described in conjunction with embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present invention.

It will be clear to those skilled in the art that, for convenience and brevity of the description, specific working procedures of the above described systems, devices and units may be referred to corresponding procedures in the preceding method embodiments and will not be described in detail here.

The above description is only for the specific embodiments of the present invention, but the scope of the present invention is not limited thereto. Any person skilled in the art may easily think of changes or substitutions within the technical scope of the present invention, which shall be covered by the protection scope of the present invention. Therefore, the protection scope of the present application shall be in line with the attached claims.

## Claims

1. An information transmission method, performed by a first terminal, comprising:
in a case where the first terminal performs a physical sidelink feedback channel, PSFCH, transmission in an unlicensed frequency band, monitoring a channel in a first type of channel access mode or a second type of channel access mode.

2. The method of claim 1, further comprising:
before the first terminal performs the PSFCH transmission, in a case where no shareable channel occupancy time, COT of a second terminal exists, using, by the first terminal, a first channel access priority to monitor the channel in the first type of channel access mode.

3. The method of claim 2, wherein using, by the first terminal, the first channel access priority to monitor the channel in the first type of channel access mode comprises:
in a case where the first terminal performs only the PSFCH transmission,
using, by the first terminal, the first channel access priority configured by a network device to monitor the channel in the first type of channel access mode, or
using, by the first terminal, the first channel access priority that is the same as a channel access priority of data carried on a physical sidelink shared channel, PSSCH, corresponding to the PSFCH to monitor the channel in the first type of channel access mode.

4. The method of claim 3, wherein the first channel access priority configured by the network device comprises:
the first channel access priority configured by the network device based on a cell-specific or user equipment-specific, UE-specific, configuration.

5. The method of claim 3 or 4, wherein the first channel access priority configured by the network device comprises:
the first channel access priority, configured by the network device, being a highest channel access priority, or
the first channel access priority, configured by the network device, being not a highest channel access priority.

6. The method of claim 3, further comprising:
determining the channel access priority of the data carried on the PSSCH according to a quality of service, QoS, flow identifier of the data carried on the PSSCH.

7. The method of claim 2, wherein using, by the first terminal, the first channel access priority to monitor the channel in the first type of channel access mode comprises:
in a case where the first terminal performs a PSSCH transmission after the PSFCH transmission, and in a case where a channel access priority of data carried on a PSSCH after the PSFCH transmission is a second channel access priority,
using, by the first terminal, the first channel access priority that is the same as the second channel access priority to monitor the channel in the first type of channel access mode.

8. The method of claim 7, further comprising:
determining the channel access priority of the data carried on the PSSCH according to a QoS flow identifier of the data carried on the PSSCH.

9. The method of claim 2, wherein using, by the first terminal, the first channel access priority to monitor the channel in the first type of channel access mode comprises:
in a case where the first terminal performs a PSSCH transmission after the PSFCH transmission, and in a case where the first terminal is pre-configured to use a third channel access priority to monitor the channel in the first type of channel access mode, and a channel access priority of data carried on a PSSCH after the PSFCH transmission is a second channel access priority,
using, by the first terminal, the first channel access priority that is the same as a lower one between the third channel access priority and the second channel access priority to monitor the channel in the first type of channel access mode.

10. The method of claim 9, wherein pre-configuring the first terminal to use the third channel access priority to monitor the channel in the first type of channel access mode further comprises:
pre-configuring the first terminal to use the third channel access priority configured by a network device to monitor the channel in the first type of channel access mode, or
pre-configuring the first terminal to use the third channel access priority that is the same as the channel access priority of the data carried on the PSSCH corresponding to the PSFCH to monitor the channel in the first type of channel access mode.

11. The method of claim 10, wherein the third channel access priority configured by the network device comprises:
the third channel access priority configured by the network device based on a cell-specific or UE-specific configuration.

12. The method of claim 10 or 11, wherein the third channel access priority configured by the network device comprises:
the third channel access priority configured by the network device being a highest channel access priority, or the third channel access priority configured by the network device being not a highest channel access priority.

13. The method of claim 10, further comprising:
determining the channel access priority of the data carried on the PSSCH according to a QoS flow identifier of the data carried on the PSSCH.

14. The method of claim 1, wherein the second type of channel access mode comprises: a Type2A channel access mode, a Type2B channel access mode, and a Type2C channel access mode;
wherein the method further comprises:
acquiring first indication information configured by a network device; and
monitoring, by the first terminal, the channel in the Type2A channel access mode, the Type2B channel access mode, or the Type2C channel access mode according to the first indication information.

15. The method of claim 14, wherein acquiring the first indication information configured by the network device further comprises:
acquiring the first indication information configured by the network device based on a cell-specific or UE-specific configuration.

16. The method of any one of claims 1 to 15, further comprising:
before the first terminal performs the PSFCH transmission, in a case where a shareable COT of a second terminal exists, monitoring, by the first terminal, the channel in the second type of channel access mode.

17. An information transmission method, performed by a network device, comprising:
configuring first indication information and/or a first channel access priority for a first terminal, wherein the first indication information instructs the first terminal to monitor a channel in a Type2A channel access mode, a Type2B channel access mode, or a Type2C channel access mode, and the first channel access priority is a channel access priority used by the first terminal to monitor the channel in a first type of channel access mode.

18. The method of claim 17, further comprising:
configuring the first indication information and/or the first channel access priority for the first terminal based on a cell-specific or UE-specific configuration.

19. An information transmission apparatus, comprising:
a processing module configured to monitor a channel in a first type of channel access mode or a second type of channel access mode in a case where a first terminal performs a PSFCH transmission in an unlicensed frequency band.

20. An information transmission apparatus, comprising:
a transceiving module configured to configure first indication information and/or a first channel access priority for a first terminal, wherein the first indication information instructs the first terminal to monitor a channel in a Type2A channel access mode, a Type2B channel access mode, or a Type2C channel access mode, and the first channel access priority is a channel access priority used by the first terminal to monitor the channel in a first type of channel access mode.

21. A communication device, comprising:
a processor, and
a memory for storing a computer program,
wherein the processor is configured to execute the computer program stored in the memory to cause the device to perform the method of any one of claims 1 to 16.

22. A communication device, comprising:
a processor, and
a memory for storing a computer program,
wherein the processor is configured to execute the computer program stored in the memory to cause the device to perform the method of claim 17 or 18.

23. A communication device, comprising a processor and an interface circuit;
wherein the interface circuit is configured to receive a code instruction and transmit the code instruction to the processor; and
the processor is configured to run the code instruction to perform the method of any one of claims 1 to 16.

24. A communication device, comprising a processor and an interface circuit;
wherein the interface circuit is configured to receive a code instruction and transmit the code instruction to the processor; and
the processor is configured to run the code instruction to perform the method of claim 17 or 18.

25. A computer-readable storage medium having stored therein instructions that, when executed, cause the method of any one of claims 1 to 16 to be implemented.

26. A computer-readable storage medium having stored therein instructions that, when executed, cause the method of claim 17 or 18 to be implemented.
